# EUROPEAN PATENT APPLICATION

(11) **EP 3 456 975 A1**
(43) Date of publication of application: **20.03.2019**
(21) Application number: 18192352.5
(22) Date of filing: 04.09.2018
(51) Int. Cl.: F04D 17/12, F04D 29/10, F04D 29/66

(54) **ROTATING MACHINE COMPRISING A SEAL RING DAMPING SYSTEM**

(30) Priority: 18.09.2017 FR 1758628
(71) Applicant: Thermodyn SAS, 71200 Le Creusot (FR)
(72) Inventor: DEFOY, Benjamin David, 71203 Le Creusot (FR)
(74) Representative: Illingworth-Law, William Illingworth

(57) **Abstract**

A rotating machine having a rotor mounted to rotate in a casing and bearing at least a plurality of impellers is provided. The machine may include at least one seal ring disposed radially between the rotor and the casing and mounted to move radially in a seal support of the casing, and characterized in that it comprises a damping system for the seal ring disposed radially between the seal ring and the seal support. The damping system is configured to damp the seal.

## Description

The present invention relates to the field of rotating machines, for example centrifugal compressors, and in particular the seal rings for such compressors.

Generally, a centrifugal compressor with multiple compression stages comprises a plurality of impellers borne by a driven shaft coupled to a rotor driven by a motor or a turbine. Each impeller comprises a plurality of radial vanes making it possible to suck the gas axially in relation to the rotor.

In order to limit the gas leaks between the compression stages reducing the efficiency of the rotating machine, it is known practice to incorporate seals such as labyrinth or honeycomb seals, in particular between the rotor and the stator part, without contact between the rotor and said stator part.

However, in the case of the centrifugal compressors, when the latter operate at high pressure, the dynamic coefficients of the seals affect the dynamic stability of the rotor which is affected by vibrations. In effect, when the pressure increases, the density of the gas increases which consequently increases the instability of the rotating machine by increasing the interaction between the rotor and the stator at the seal ring level.

In a certain case, the vibrations exceed the standards imposed by the "API617" standard. Several known methods make it possible to limit the vibrations, such as, for example, by increasing the radial play between the seal and the rotor. However, the efficiency of the compressor is greatly reduced.

Reference will also be able to be made to the document WO 2014 038 079 - A1 which describes a turbomachine comprising a rotary wheel, a stator and a labyrinth seal comprising a plurality of teeth delimiting a chamber between each tooth. A pressure absorption element is disposed in each of the chambers and is displaced radially in said chamber in order to reduce or increase its volume in order to reduce the pressure applied locally in said chamber. Such a solution is particularly complex and does not make it possible to modify the mechanical properties of the labyrinth seal.

It is also known practice to modify the coefficients of the dynamic seals by acting on the aerodynamics of the seals of the compressors, for example by modifying the geometry of the seal, for example by using a seal of honeycomb alveolar structure. It is also possible to place blades upstream of the labyrinth seal in order to redirect the gas in the direction of flow of the leak or to inject gas upstream of the seal, at right angles to the seal ring in order to modify the flow of the gas in order to modify the sealing coefficient.

However, such solutions affect the effectiveness of the compressor.

The aim of the present invention is to act on the mechanical and vibratory aspect of the labyrinth seals in order to modify their characteristics in terms of stiffness and of damping in order to increase the stability of the rotating machines, to reduce the vibrations and to allow the production of high-pressure compressors.

The subject of the invention is a rotating machine comprising a rotor mounted to rotate in a casing and bearing at least a plurality of impellers, said machine comprising at least one seal ring disposed radially between the rotor and the casing and mounted to move radially in a seal support secured to the casing.

The rotating machine comprises a damping system for said seal ring disposed between the seal ring and the seal support, the damping system being configured to mechanically damp the seal, at the level of its fixing on its support.

Thus, the damping system can guarantee an absorption of the energy from any disturbance originating from the gas flow, in order to stabilize the rotor and increase the efficiency of the centrifugal compressors operating under high pressure.

There is thus only one seal ring-based damping system.

Generally, the damping system is configured to allow a small displacement of the labyrinth seal, for example of the order of a few 100ths of millimetres in order to allow a mechanical damper behind the seal, at the level of its fixing on its support, and thus guarantee an absorption of the energy from any disturbance coming form the gas flow, in order to stabilize the rotor and increase the efficiency of the centrifugal compressors operating under high pressure.

The damping system makes it possible to obtain a damping of the labyrinth seal and thus modify the coefficient of the seal in terms of stiffness and of damping.

Advantageously, the seal ring is annular or semi-annular and can comprise a fixing part in the seal support secured to the casing and a part in the form of comb teeth extending radially towards the rotor.

The fixing part is, for example, held radially in an annular recess provided in the casing while being radially mobile in said recess, said damping system being disposed in the recess receiving the seal radially between the fixing part of the seal and the casing.

According to one embodiment, the damping system is a corrugated annular band configured to be deformed when the pressure increases and thus damp the labyrinth seal by absorbing the energy upon its deformation. The corrugated annular band is, for example, made of a metal material, such as steel.

According to one embodiment, the damping system is a washer comprising a plurality of braided fibres in contact between the fixing part of the seal and the seal support. The washer is configured to damp the labyrinth seal by absorbing the energy upon the deformation of each of the fibres. The washer is, for example, made of a metal material, such as steel or copper.

According to one embodiment, the damping system is a compression film encapsulated in a tight cavity of a segment containing oil.

The rotating machine can be a multistage centrifugal compressor.

Other aims, features and advantages of the invention will become apparent on reading the following description, given purely as a nonlimiting example, and with reference to the attached drawings in which:
- Figure 1 very schematically represents a rotating machine comprising a damping system according to the invention;
- Figure 2 is a view of details of figure 1; and
- Figures 3 to 5 represent three exemplary embodiments of a damping system according to the invention.

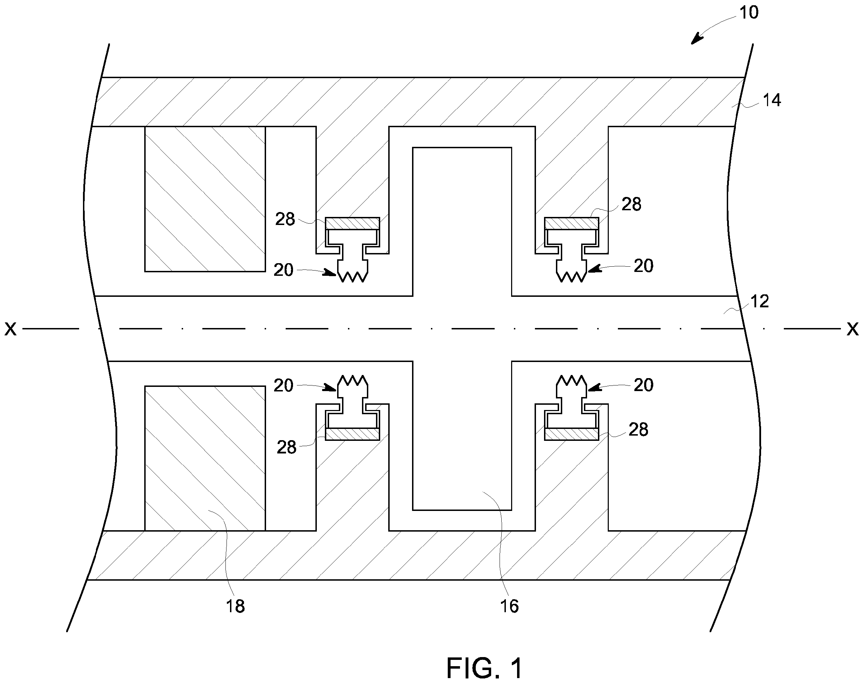

Figure 1 very schematically illustrates a rotating machine, referenced 10 overall and comprising a casing or a stator part 14 of the casing and a rotor 12 intended to be driven in rotation via a motor (not represented) mounted in said casing 14. The rotor 12 bears a plurality of impellers 16, of which only one is represented in figure 1. As illustrated, the rotor 12 is supported by a bearing 18 in the casing 14.

The rotating machine 10 can be a multistage centrifugal compressor or a gas turbine or any other rotating machine.

Seal rings 20 of labyrinth type are disposed on either side of each of the impellers. Each seal 20 is annular or semi-annular and comprises a fixing part 22 in a seal support secured to the casing 14 of the rotating machine and a part in the form of comb teeth 24 extending radially towards the rotor 12.

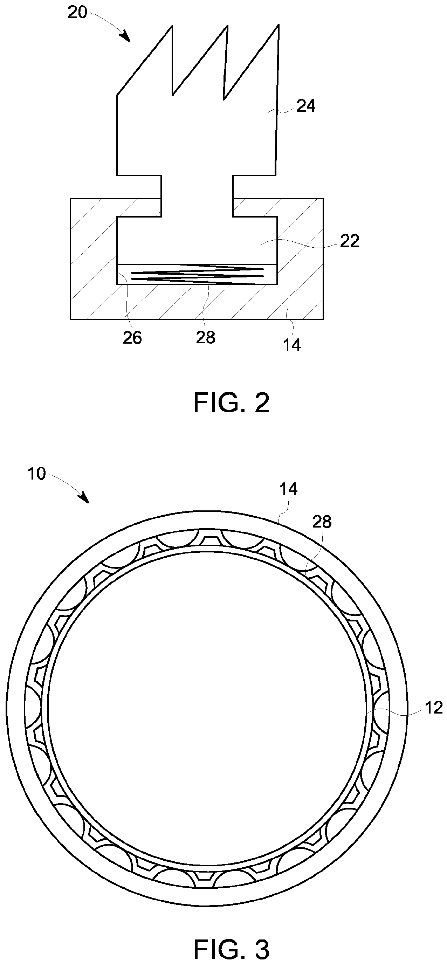

As illustrated in details in figure 2, the fixing part 22 is held radially in an annular recess 26 provided in the casing 14 while being radially mobile in said recess 26.

A damping system 28 is disposed in said recess between the casing 14 and the fixing part 22 of the labyrinth seal 20.

Generally, the damping system 28 is configured to allow a small displacement of the labyrinth seal, for example of the order of 100ths of millimetres in order to allow a mechanical damping behind the seal, at the level of its fixing on its support and thus guarantee an absorption of the energy from any disturbance coming from the gas flow, in order to stabilize the rotor and increase the efficiency of the centrifugal compressors operating under high pressure.

In other words, the damping system 28 does not allow a displacement of the labyrinth seal and thus makes it possible to avoid having the labyrinth seal come away in the event of a significant pressure generating a significant flow.

In the embodiment illustrated in figure 3, the damping system 28 is a corrugated annular band, for example made of steel, disposed in the recess 26 receiving the seal 20 between the fixing part 22 of the seal 20 and the casing 14 and configured to be deformed when the pressure increases and thus damp the labyrinth seal by absorbing the energy upon its deformation.

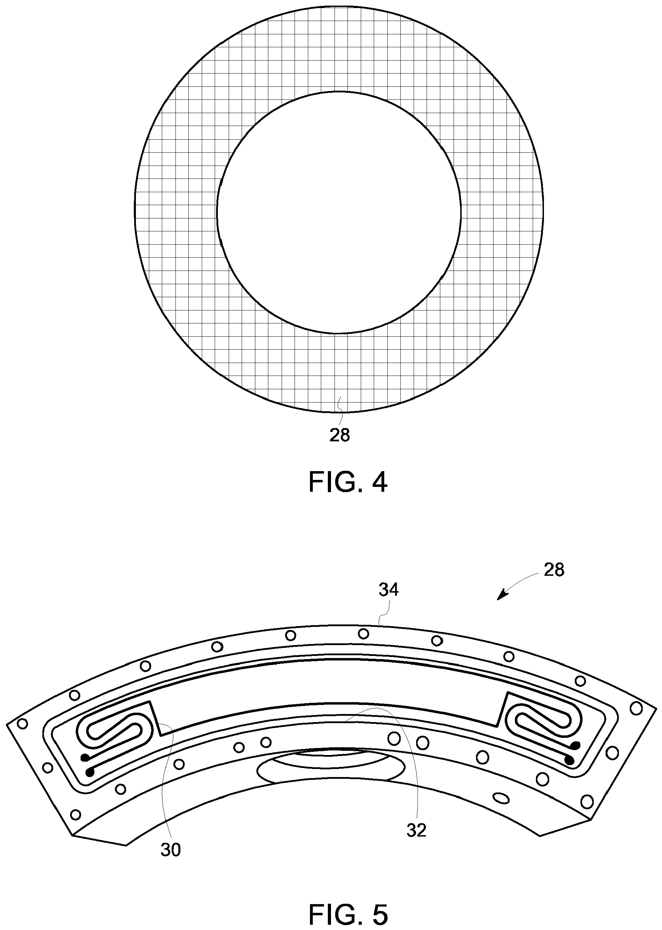

In the embodiment illustrated in figure 4, the damping system 28 is a washer comprising a plurality of braided fibres and disposed in the recess 26 receiving the seal 20 in contact between the fixing part 22 of the seal 20 and the casing 14 and configured to damp the labyrinth seal by absorbing the energy upon the deformation of each of the fibres. The washer is, for example, produced in a metal material, such as steel or copper. The displacement of the seal is then limited by mechanical abutments.

In the embodiment illustrated in figure 5, the damping system 28 is a compression film 30 encapsulated in a tight cavity 32 of a segment 34 containing oil. The displacement of the seal causes the deformation of the support. The damping is then provided by the crushing of the oil film contained in the interstice 30.

Generally, the damping system 28 makes it possible to obtain a damping of the labyrinth seal and thus modify the coefficient of the seal in terms of stiffness and of damping.

As will be understood, the invention makes it possible to place a mechanical damper behind the seal. Typically, in the known state of the art, the labyrinth seals are rigidly mounted in the casing of the compressor.

By virtue of the mechanical damping system according to the invention, it is possible to absorb the disturbance energy coming from the gas flow and stabilize the rotor.

In addition, the invention can be easily employed to improve the existing compressors, making it possible to reduce their cost price and servicing cost.

Finally, the invention makes it possible to produce integrated high-pressure compressors.

## Claims

1. Rotating machine comprising a rotor (12) mounted to rotate in a casing (14) and bearing at least a plurality of impellers, said machine comprising at least one seal ring (20) disposed radially between the rotor and the casing (14) and mounted to move radially in a seal support of the casing (14), **characterized in that** it comprises a damping system (28) for said seal ring disposed radially between the seal ring and the seal support, the damping system being configured to damp the seal.

2. Machine according to Claim 1, in which the seal ring (20) comprises a fixing part (22) in the seal support secured to the casing (14) and a part in the form of comb teeth (24) extending radially towards the rotor (12).

3. Machine according to Claim 2, in which the fixing part (22) is held radially in an annular recess (26) provided in the casing (14) while being radially mobile in said recess (26), said damping system (28) being disposed in the recess (26) receiving the seal (20) radially between the fixing part (22) of the seal (20) and the casing (14).

4. Machine according to any one of the preceding claims, in which the damping system (28) is a corrugated annular band configured to be deformed when the mechanical pressure increases.

5. Machine according to any one of Claims 1 to 3, in which the damping system (28) is a washer comprising a plurality of braided fibres in contact between the fixing part (22) of the seal (20) and the seal support.

6. Machine according to any one of Claims 1 to 3, in which the damping system (28) is a compression film (30) encapsulated in a tight cavity (32) of a segment (34) containing oil.

7. Machine according to any one of the preceding claims, in which the rotating machine (10) is a multi-stage centrifugal compressor.
